Europäisches Patentamt

European Patent Office

Office européen des brevets

Veröffentlichungsnummer: **0 287 798**

**A1**

# EUROPÄISCHE PATENTANMELDUNG

Anmeldenummer: 88103842.6

Anmeldetag: 11.03.88

Int. Cl.⁴ **B65D 88/08 , E04H 7/06 , B23K 37/02**

Priorität: 20.11.87 DE 3739359
25.03.87 DE 3709843

Veröffentlichungstag der Anmeldung:
**26.10.88 Patentblatt 88/43**

Benannte Vertragsstaaten:
**AT IT NL**

Anmelder: **Silo Verfahrens AG**
**Hofstrasse 1**
**CH-6301 Zug(CH)**

Erfinder: **Lipp, Xaver**
**Hohenstaufenstrasse 30**
**D-7090 Ellwangen(DE)**

Vertreter: **Patentanwälte Phys. Bartels**
**Dipl.-Ing. Fink Dr.-Ing. Held**
**Lange Strasse 51**
**D-7000 Stuttgart 1(DE)**

Abdeckung für Behälter mit grossem Durchmesser sowie Schweissvorrichtung zum Herstellen von Blechtafeln für eine solche Abdeckung.

Für Behälter mit großem Durchmesser, beispielsweise für große Silos (1) oder für Klärbecken, ist als eine Flachdecke bildendes Bauelement der Abdeckung (5) eine Membrane (7) vorgesehen, die aus nebeneinanderliegenden Blechbahnen (8) gebildet ist, die an ihren Längsrändern mittels Schweißen miteinander verbunden sind. Die Membrane (7) liegt mit ihrem Außenrandbereich (11) auf dem oberen Behälterrand (2) auf und trägt auf ihrer Oberseite eine Kiesschüttung (17), welche durch ihr Gewicht einen Durchhang der Membrane (7) erzeugt. Diese ist mit einem Ablauf (19, 21, 22) versehen, um infolge des Durchhangs der Membrane (7) angesammeltes Regen-oder Schmelzwasser abzuführen.

**Fig.1**

# Abdeckung für Behälter mit großem Durchmesser sowie Schweißvorrichtung zum Herstellen von Blechtafeln für eine solche Abdeckung

Die Erfindung betrifft für Behälter mit großem Durchmesser vorgesehene Abdeckungen, die in Form einer Flachdecke ausgebildet sind.

Herkömmliche Abdeckungen dieser Art sind in einer Bauweise ausgeführt, die der Bedachung eines Gebäudes ähnlich ist, d.h., es sind Flachdecken vorgesehen, die eine selbsttragende starre Struktur bilden oder durch eine starre Tragstruktur getragen sind. Bei den beträchtlichen Spannweiten, die sich bei großen Behältern, beispielsweise bei großen Silos oder bei Klärbecken, ergeben, müssen die entsprechenden Elemente in recht aufwendiger Bauweise hergestellt werden, um die erforderliche Tragfestigkeit zu erreichen. Angesichts der sich ergebenden hohen Errichtungskosten bleiben daher Behälter großen Durchmessers, insbesondere Klärbecken, vielfach ohne jede Abdeckung, obwohl das Vorhandensein einer Abdeckung insbesondere bei Klärbecken im Interesse der Vermeidung einer Geruchsbelästigung der Umwelt besonders wünschenswert wäre.

Der Erfindung liegt die Aufgabe zugrunde, hier durch eine Abdeckung für Behälter großen Durchmessers Abhilfe zu schaffen, die besonders einfach und billig herstellbar ist.

Erfindungsgemäß löst diese Aufgabe eine Abdeckung für Behälter mit großen Durchmesser, mit einer Flachdecke in Form einer ein Hängedach bildenden Membrane aus nebeneinanderliegenden Blechstücken, die miteinander verschweißt sind, wobei die Abdeckung dadurch gekennzeichnet ist, daß die Blechstücke durchgehende Blechbahnen sind und die Membrane als selbsttragendes Bauelement ausgebildet ist, das mit seinem Außenrandbereich am oberen Rand des Behälters abgestützt ist.

Bei der erfindungsgemäßen Lösung findet anstelle einer herkömmlichen starren Flachdecke ein dünnes und leichtes Bauelement in Form eine Membrane Verwendung. Die aus Blechbahnen, beispielsweise aus Blechbahnen mit einer Wandstärke in der Größenordnung von 0,5 mm bis 1 mm, gefertigte Membrane stellt auch bei sehr großen Spannweiten ein selbsttragendes Bauelement dar. Zusätzliche Tragelemente sind deshalb nicht erforderlich. Die erfindungsgemäße Abdeckung zeichnet sich daher durch eine besonders einfache Bauweise und sich hierdurch ergebende geringe Gestehungskosten aus.

Bei einem bevorzugten Ausführungsbeispiel trägt die auf dem Behälter aufliegende Membrane eine sie beschwerende, einen Durchhang der Membrane erzeugende Schüttung, vorzugsweise eine Kiesschüttung, und an der Membrane ist ein Ablauf vorgesehen, um infolge des Durchhangs der Membrane angesammeltes Regen-oder Schmelzwasser abzuführen. Bei einem solchen Ausführungsbeispiel erreicht man auf einfachste Weise eine besonders hohe Sturmsicherheit auch bei sehr großen Spannweiten oder Behälterdurchmessern.

Bei einem weiteren vorteilhaften Ausführungsbeispiel ist vorgesehen, daß die Membrane aus Bahnen aus Edelstahlblech gefertigt ist. Ein solches Ausführungsbeispiel eignet sich besonders als Abdeckung für Klärbecken oder andere Behälter, in denen sich chemisch agressive Gase oder Dämpfe entwickeln.

Eine weitere Aufgabe der Erfindung ist es, eine Schweißvorrichtung für die Herstellung großer Blechtafeln zu schaffen, insbesondere von Blechtafeln für Abdeckungen großer Behälter. Hierfür sieht die Erfindung eine Schweißvorrichtung zum Herstellen einer zusammengesetzten Blechtafel durch Bildung einer Bördelnaht zwischen nebeneinandergelegten Blechbahnen vor, mit einer Elektrodenanordnung zum Erzeugen eines zwischen ihr und den zu verschweißenden Blechbahnen im Bereich von deren seitlichen, aufgestellten, aneinanderliegenden Bördeln brennenden Lichtbogens, wobei diese Vorrichtung dadurch gekennzeichnet ist, daß die Elektrodenanordnung an einem auf der Oberseite der Blechbahnen laufenden Schweißwagen angebracht ist, der zur Steuerung seiner Laufrichtung mindestens ein Steuerelement aufweist, das an den eine ihm zugeordnete Führungsschiene bildenden Bördeln geführt ist.

Nachstehend ist die Erfindung anhand von in der Zeichnung dargestellten Ausführungsbeispielen im einzelnen erläutert.

Es zeigen:

Fig. 1 einen zentralen Vertikalschnitt des oberen Abschnitts eines siloartigen Behälters mit einer Abdeckung gemäß einem Ausführungsbeispiel der Erfindung;

Fig. 2 eine Draufsicht einer für das Ausführungsbeispiel von Fig. 1 vorgesehenen Membrane vor deren Anbringung am Behälter;

Fig. 3 eine schematisch vereinfacht gezeichnete perspektivische Ansicht eines Ausführungsbeispiels der Schweißvorrichtung gemäß der Erfindung und

Fig. 4 eine teils abgebrochen gezeichnete Seitenansicht des Schweißwagens des Ausführungsbeispiels von Fig. 3 , gesehen mit der dort mit II angegebenen Blickrichtung.

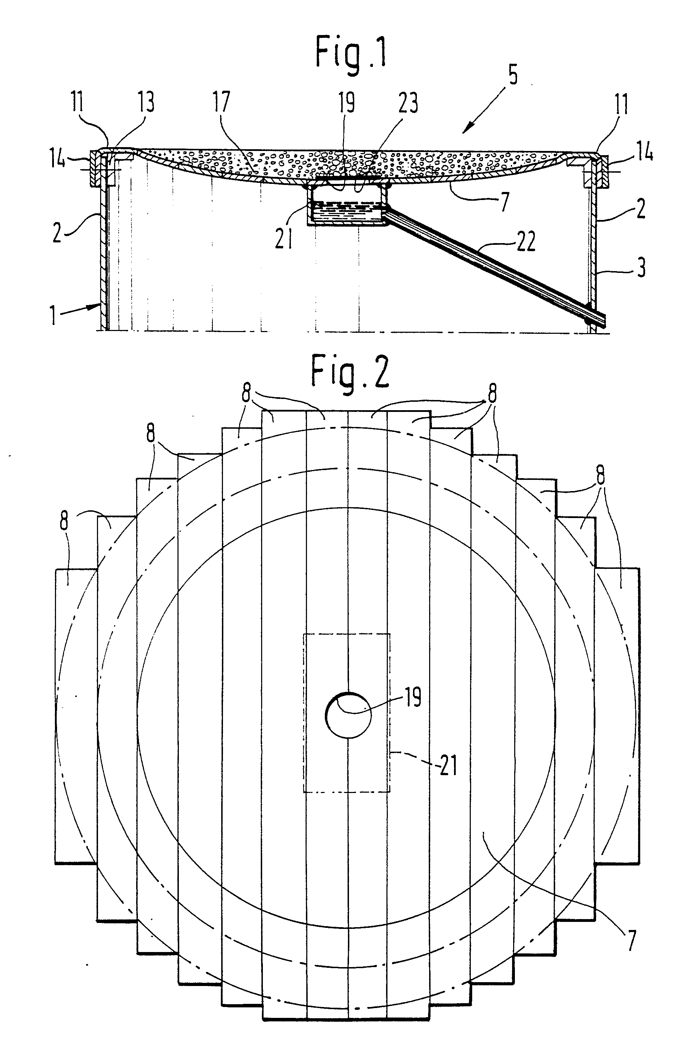

Von einem Behälter in Form eines Silos 1 großen Durchmessers zeigt Fig. 1 den oberen Abschnitt mit einer am oberen Rand 2 der Behälterseitenwand 3 vorgesehenen. als Ganzes mit 5 bezeichneten Abdeckung. Diese weist eine durch eine Metallmembrane 7 gebildete Flachdecke auf. Wie aus Fig. 2 ersichtlich ist, besteht die Membrane 7 aus einer Vielzahl nebeneinanderliegender Blechbahnen 8, die an ihren Längsrändern durch Verschweißen miteinander verbunden sind. Die Längen der Blechbahnen 8 sind so bemessen, daß die aus ihnen zusammengesetzte Membrane 7 eine dem Grundriß des betreffenden Behälters angepaßte Form, also bei dem hier gezeigten kreiszylindrischen Silo 1 eine annähernd runde Form. hat, siehe Fig. 2. Beim Ausführungsbeispiel ist als Werkstoff für die Blechbahnen 8 Edelstahl vorgesehen. so daß eine Oberflächenbehandlung der aus ihnen gebildeten Membrane 7 entfällt, selbst wenn diese für eine Abdeckung bei einem Behälter mit chemisch agressiven Inhaltsstoffen vorgesehen ist. Die Blechstärke beträgt beim Ausführungsbeispiel 0.5 mm.

Wie Fig. 1 zeigt, ist die Membrane 7 in ihrem Außenrandbereich 11 über den oberen Rand 2 der Behälterseitenwand 3 nach abwärts umgebogen. Der obere Rand 2 des Silos 1 weist eine innere Randverstärkung aus mit der Silowand verschweißten L Profilabschnitten 13 auf, deren oberer Schenkel zusammen mit dem Rand 2 der Seitenwand 3 eine Auflagefläche für die Membrane 7 bildet. Eine äußere Randverstärkung in Form eines Ringes 14 aus einem Flachband umgibt den umgebogenen Außenrandbereich 11 der Membrane 7. Der umgebogene Randbereich 11, der äußere Ring 14 und der obere Rand 2 der Seitenwand 3 sind miteinander verschweißt oder verschraubt. Es ist aber auch möglich, auf das Abbiegen des Randbereiches der Membrane 7 zu verzichten und die Membrane im Bereich der Auflagefläche der Seitenwand mit dieser fest zu verbinden..

Auf ihrer Oberseite trägt die Membrane 7 eine Kiesschüttung 17. Das Gewicht der Schüttung 17 bewirkt infolge der elastischen Nachgiebigkeit der Membrane 7 einen Durchhang, d.h. eine Wölbung der Membrane 7 nach abwärts oder einwärts in etwa in Form einer Kugelkalotte. Für die Abfuhr des Regen-oder Schmelzwassers, das sich infolge des Durchhangs auf der Abdeckung ansammeln kann, ist ein Ablauf vorgesehen. Wie insbesondere aus Fig. 1 zu ersehen ist, weist der Ablauf im Zentralbereich, also im tiefstgelegenen Bereich der Membrane 7, unterhalb einer Abflußöffnung 19 einen mit der Unterseite der Membrane 7 verschweißten Sammelkasten 21 auf, mit dem ein Abflußrohr 22 verbunden ist, das durch die Seitenwand 3 des Silos 1 nach außen geführt ist. Die Abflußöffnung 19 ist durch ein auf der Oberseite der Membrane 7 aufliegendes Siebgitter 23 bedeckt. dessen Öffnungsweite der Körnung der Kiesschüttung 17 so angepaßt ist. daß ein Durchtritt von Schüttgut vermieden ist.

Durch die Beschwerung der Membrane 7 mit der Kiesschüttung 17 ist die Abdeckung 5 mit dem Silo 1 sturmsicher verbunden. auch wenn die Abdeckung lediglich auf den oberen Rand 2 aufgelegt und nicht mit diesem verschweißt ist. Wenn die Abdeckung 5 einen geruchsdichten Abschluß des betreffenden Behälters bilden soll. kann zwischen Membrane 7 und Rand 2 ein geeignetes Abdichtelement eingelegt sein. was in der Zeichnung nicht dargestellt ist.

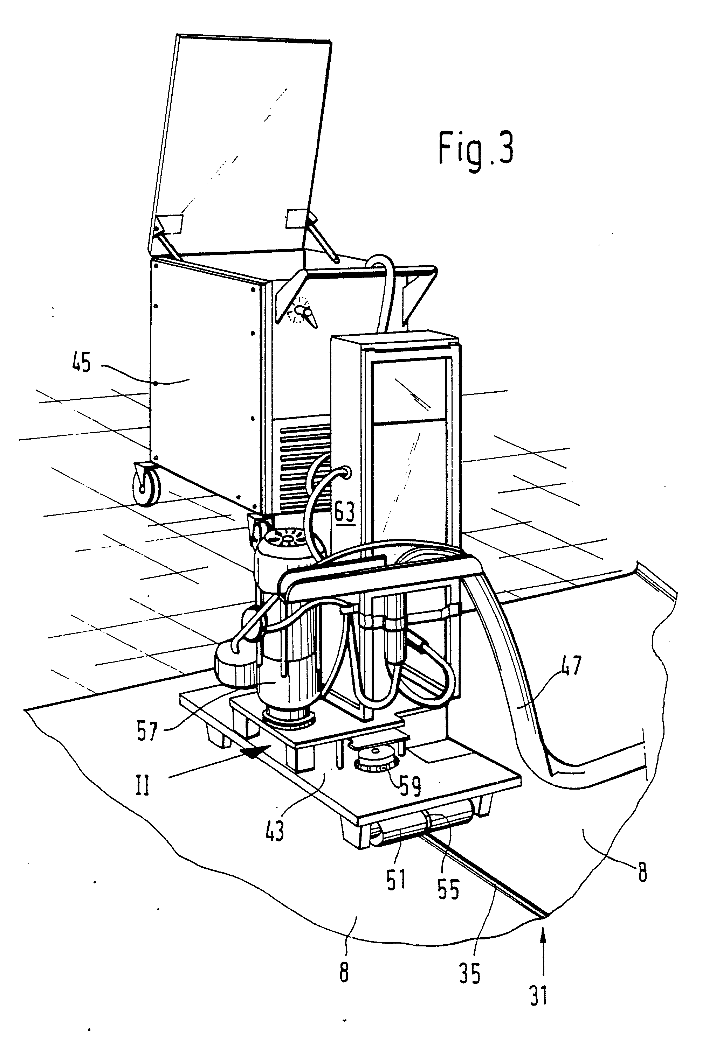

Zur Herstellung einer in Fig. 3 als Ganzes mit 31 bezeichneten zusammengesetzten Blechtafel aus längsseits nebeneinanderliegenden Blechbahnen 8 werden deren Seitenränder mit aus der Ebene der Blechbahnen 8 rechtwinklig aufgestellten Bördeln 35 versehen. was auf übliche Weise bewerkstelligt werden kann, beispielsweise. indem eine Relativbewegung zwischen den Blechbahnen 8 und einer üblichen Anordnung von Bördelrollen durchgeführt wird. Vor dem Verschweißen liegen die aufgestellten Bördel 35 der Bahnen 8 breitseits aneinander. Beim Schweißvorgang werden die Bördel 35 vollständig beseitigt, indem sie praktisch bis auf das Niveau der Oberseite der Bahnen 8 abgeschmolzen werden. Die von dem Werkstoff der Bördel 35 stammende Schmelze bildet die Schweißnaht, die. eine leichte örtliche Verdickung des Blechquerschnitts bildend. sich von der Oberseite bis zur Unterseite der Blechbahnen erstreckt.

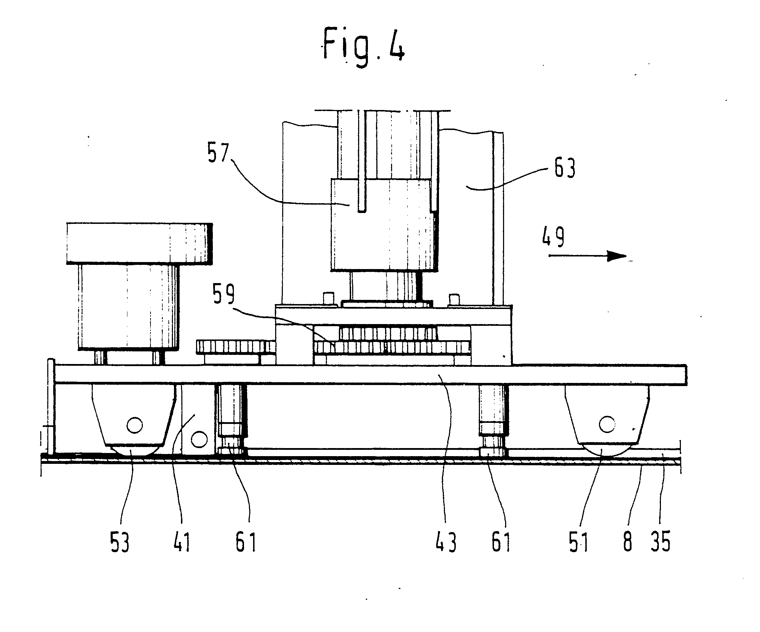

Figuren 3 und 4 zeigen eine Ausführungsbeispiel einer zur Beseitigung der Bördel 35 und zur Ausbildung der Schweißnaht dienenden Schweißvorrichtung, wobei es sich um eine solche für das Lichtbogenschweißen unter Schutzgas handelt. Die eigentliche Elektrodenanordnung und die Einrichtungen zum Bilden einer bereichsweisen Schutzgasatmosphäre unterscheiden sich nicht grundsätzlich von bekannten Schweißvorrichtungen für das Arcatom-oder Argonarc-Verfahren oder für Abwandlungen dieser Verfahren, sodaß sich diesbezüglich eine ins einzelne gehende. nähere Beschreibung erübrigt. Erwähnt sei lediglich, daß keine Einrichtung zum Zuführen von Zusatzmetall vorgesehen ist. weil. wie bereits erwähnt. die Schmelze der beim Schweißen zu beseitigenden Bördel 35 zur Bildung der Schweißnaht zur Verfügung steht.

Die Elektrodenanordnung, von der lediglich in Fig. 4 ein Elektrodenhalter 41 angedeutet ist, befindet sich zusammen mit der Schutzgaseinrichtung an einem Schweißwagen 43, der mit einem zugehörigen Versorgungsaggregat 45 über einen flexiblen Versorgungsstrang 47 verbunden ist, sodaß der Schweißwagen 43 relativ zum Aggregat 45 beweglich ist. Im Versorgungsstrang 47 befinden sich sowohl Kabel als auch Schlauchleitungen, um den Schweißwagen mit elektrischer Energie, insbesondere mit dem Schweißstrom, sowie mit Schutzgas zu versorgen.

Für eine Vorschubbewegung in der in Fig. 4 mit einem Pfeil 49 bezeichneten Richtung weist der Schweißwagen 43 eine vordere Laufrolle 51 und eine hintere Laufrolle 53 auf, die auf der Oberseite der Blechbahnen 8 abrollen und am Gestell des Schweißwagens 43 frei drehbar gelagert sind. Wie aus Fig. 3 zu ersehen, weist die vordere Laufrolle 51 eine in ihr mittig angeordnete Ringnut auf, die eine Führungsrille 55 bildet, in welche die aufgestellten, aneinanderliegenden Bördel 35 der angrenzenden Blechbahnen 8 eingreifen. Aus diese Weise wirken die Bördel 35 als eine Führungsschiene, an der der Schweißwagen 43 mittels der Führungsrille 55 der vorderen Laufrolle 51 geführt ist.

Der Schweißwagen 43 weist für das Erzeugen der Vorschubbewegung in Richtung des Pfeiles 49 einen Eigenantrieb auf, zu dem ein auf der Oberseite des Schweißwagens angeordneter Flanschmotor 57, ein mit diesem verbundenes Zahnradgetriebe 59 sowie zwei von vier Andrückrollen gehören. Diese beiden Andrückrollen 61, die in Fig. 4 zu sehen sind und mit senkrecht zur Ebene der Blechbahnen 8 verlaufenden Drehachsen an der Unterseite des Schweißwagens 43 gelagert und mit dem Getriebe 59 verbunden sind, wirken jede mit je einer nicht angetriebenen mit ihr fluchtenden und daher in Fig. 4 nicht zu sehenden gleichartigen Andrückrolle zusammen. Wie Fig. 4 zeigt, laufen die angetriebenen Andrückrollen 61 an der dem Betrachter zugekehrten Seite der Bördel 35. Die nicht zu sehenden, weil hinter den Andrückrollen 61 gelegenen Andrückrollen laufen an der gegenüberliegenden Außenseite der Bördel 35. Der Abstand zwischen den Andrückrollen jedes Andrückrollenpaares ist so eingestellt, daß die Bördel 35 breitseits in der Weise gegeneinander gepreßt werden, wie dies für den Schweißvorgang erforderlich ist, der, bezogen auf die Laufrichtung (Vorschubbewegung in Richtung des Pfeils 49) im Bereich zwischen der hinteren Laufrolle 53 und dem benachbarten Andrückrollenpaar erfolgt, nämlich in dem Bereich des Elektrodenhalters 41. Mittels eines auf der Oberseite des Schweißwagens befindlichen Steuergeräts 63 ist die vom Eigenantrieb bewirkte Vorschubgeschwindigkeit in geeigneter Weise so steuerbar, daß der Schweißvorgang in gewünschter Weise abläuft. Das Steuergerät 63 enthält auch Steuermittel für die Einstellung der Schutzgaszufuhr sowie zur Steuerung des Lichtbogens.

Es hat sich gezeigt, daß eine besondere Güte der Schweißnaht erreicht wird, wenn während des Schweißvorgangs Schweißwärme von der Unterseite der Blechbahnen her abgeführt wird. Dies kann in der Weise geschehen, daß die Blechbahnen 8 beim Schweißen auf einer wärmeableitenden Unterlage aufliegen, beispielsweise auf einem nicht dargestellten Kupferblech oder einer anderen wärmeleitenden Unterlage, die gegebenenfalls mit externen Kühleinrichtungen zusammenwirken kann.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

## Ansprüche

1. Abdeckung für Behälter mit großem Durchmesser, mit einer Flachdecke in Form einer ein Hängedach bildenden Membrane aus nebeneinanderliegenden Blechstücken, die miteinander verschweißt sind, dadurch gekennzeichnet, daß die Blechstücke durchgehende Blechbahnen (8) sind und die Membrane (7) als selbsttragendes Bauelement ausgebildet ist, das mit seinem Außenrandbereich (11) am oberen Rand (2) des Behälters (1) abgestützt ist.

2. Abdeckung nach Anspruch 1, dadurch gekennzeichnet, daß die auf dem Behälter (1) aufliegende Membrane (7) eine sie beschwerende, einen Durchhang der Membrane (7) erzeugende Schüttung (17), vorzugsweise eine Kiesschüttung, trägt und daß an der Membrane (7) ein Ablauf (19, 21, 22) vorgesehen ist, um infolge des Durchhangs der Membrane (7) angesammeltes Regen- oder Schmelzwasser abzuführen.

3. Abdeckung nach Anspruch 1 oder 2, dadurch gekennzeichnet, daß die Membrane (7) aus Bahnen (8) aus Edelstahlblech gefertigt ist.

4. Abdeckung nach einem der Ansprüche 1 bis 3, dadurch gekennzeichnet, daß der Außenrandbereich (11) der Membrane (7) über den oberen Rand (2) der Seitenwände (3) des Behälters (1) hinaus nach abwärts abgebogen und im abgebogenen Bereich mit einer Randverstärkung (13, 14) der Seitenwände (3) des Behälters (1) verbunden ist.

5. Schweißvorrichtung zum Herstellen einer zusammengesetzten Blechtafel, insbesondere einer Membrane zur Verwendung bei einer Abdeckung nach einem der Ansprüche 1 bis 4, durch Bildung einer Bördelnaht zwischen nebeneinandergelegten Blechbahnen, mit einer Elektrodenanordnung zum Erzeugen eines zwischen ihr und den zu verschweißenden Blechbahnen im Bereich von deren seitlichen, aufgestellten, aneinanderliegenden Bördeln brennenden Lichtbogens, dadurch gekennzeichnet, daß die Elektrodenanordnung an einem auf der Oberseite der Blechbahnen (8) laufenden Schweißwagen (43) angebracht ist, der zur Steuerung seiner Laufrichtung mindestens ein Steuerelement aufweist, das an den eine ihm zugeordnete Führungsschiene bildenden Bördeln (35) geführt ist.

6. Vorrichtung nach Anspruch 5, dadurch gekennzeichnet, daß als Steuerelement des Schweißwagens (43) eine an diesem drehbar gelagerte, an der Führungsschiene laufende Rolle vorgesehen ist.

7. Vorrichtung nach Anspruch 6, dadurch gekennzeichnet, daß die als Steuerelement des Schweißwagens (43) dienende Rolle eine auf der Oberseite der Blechbahnen (8) abrollende Laufrolle (51) des Schweißwagens (43) ist, die mit einer Führungsrille (55) versehen ist, in die die Führungsschiene eingreift.

8. Vorrichtung nach einem der Ansprüche 5 bis 7, dadurch gekennzeichnet, daß der Schweißwagen (43) mindestens zwei miteinander zusammenwirkende Andrückrollen (61) aufweist, die die zwischen sie ragenden Bördel (35) der Blechbahnen (8) gegeneinander drücken.

9. Vorrichtung nach einem der Ansprüche 5 bis 8, dadurch gekennzeichnet, daß der Schweißwagen (43) einen steuerbaren Eigenantrieb (57, 59) aufweist.

10. Vorrichtung nach den Ansprüchen 8 und 9, dadurch gekennzeicht, daß der Eigenantrieb (57, 59) zumindest eine der Andrückrollen (61) des Schweißwagens (43) antreibt.

# Fig.1

# Fig.2

0 287 798

Fig.3

Fig.4

## EINSCHLÄGIGE DOKUMENTE

EP 88103842.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | DE - B2 - 2 645 540 (NIPPON KAKOKI CO., LTD.) <br> * Spalte 4, Zeilen 2-8; Fig. 1 * | 1 | B 65 D 88/08 <br> E 04 H 7/06 <br> B 23 K 37/02 |
| A | DE - C - 696 890 (SIEMENS-SCHUCKERT-WERKE AG) <br> * Fig. * | 5-10 | |
| A | DE - A - 2 109 441 (MILO MILFORD KENSRUE) <br> * Fig. 1-6 * | 5-10 | |
| A | WO - A1 - 85/03 658 (EVANS PIPELINE EQUIPMENT COMPANY) <br> * Fig. 1-3 * | 5-10 | |

RECHERCHIERTE SACHGEBIETE (Int Cl 4)

B 65 D

E 04 H

B 23 K

C 02 F

Der vorliegende Recherchenbericht wurde für alle Patentansprüche erstellt.

| Recherchenort | Abschlußdatum der Recherche | Prüfer |
|---|---|---|
| WIEN | 27-06-1988 | WIDHALM |